# EUROPEAN PATENT SPECIFICATION

(11) **EP 1 375 948 B1**
(45) Date of publication and mention of the grant of the patent: **01.04.2009**
(21) Application number: 03076537.4
(22) Date of filing: 21.05.2003
(51) Int. Cl.: F16D 25/12, F16D 25/08, B60T 17/02

(54) **Power transmission device with safety means for venting the pressurised fluid used to disengage the said device**
Kraftübertragungsvorrichtung mit Sicherheitsmitteln zum Entlüften der Druckflüssigkeit, die zum Lösen dieser Vorrichtung dient
Dispositif de transmission de puissance avec moyen de sécurité pour désaérage de fluide sous pression servant à désbrayage de ce dispositif

(30) Priority: 31.05.2002 IT MI20021178
(43) Date of publication of application: 02.01.2004
(73) Proprietor: Baruffaldi S.p.A., 20067 Tribiano (MI) (IT)
(72) Inventor: Boffelli, Piercarlo, Milano (IT)
(74) Representative: Raimondi, Margherita

(56) References cited:
- EP-A- 0 147 063
- EP-A- 0 191 150
- EP-A- 0 570 841
- DE-A- 10 008 526
- FR-A- 2 576 073
- US-A- 4 775 041
- US-A- 5 743 370

## Description

The present invention relates to a device for transmitting the motive power from a driving gear to a rotating shaft, comprising a disk clutch acting upon actuation of spring means and an annular piston for disengaging the said clutch, said piston having a radial duct for discharging the pressurised operating fluid.

It is known in the sector relating to the production of vehicles, in particular industrial vehicles such as lorries and the like, that there exists the need to supply the braking system with compressed air supplied from a compressor, the crankshaft of which is normally connected to the engine shaft or a transmission thereof.

It is also known that said compressor uses a considerable amount of power and must therefore be kept in operation only for the time required to restore the maximum value of the operating pressure, should this value drop as a result of operation of the brakes.

For this purpose engaging/disengaging devices, arranged between the engine shaft and the crankshaft of the said compressor, have been provided; said devices essentially consist of a spring clutch which can be deactivated by means of an annular piston which operates the bell of the clutch under the control of a solenoid valve which opens the gas storage reservoir when it has reached a predetermined pressure and conveys the discharged excess air to the said piston so as to push it against the bell of the clutch and disengage the latter so as to cause the crankshaft of the compressor to assume the idle condition with respect to the engine shaft.

Example of the prior art is disclosed into EP 0 570 841.

Although performing their intended function, these engaging/disengaging devices nevertheless have a drawback arising from the fact that there are no safety means able to prevent, on the one hand, the pressurised air escaping into the engine housing and, on the other hand, the infiltration of the engine housing oil into the piston chamber.

The technical problem which is posed, therefore, is that of providing a device for engaging/disengaging compressors for braking systems of vehicles and the like which has safety means for preventing air/oil escaping from the respective housings.

These technical problems are solved according to the present invention by a device for transmitting the motive power from a driving gear to a rotating shaft, according to the characteristics of claim 1.

Further characteristic features will emerge from the following description of a non-limiting example of embodiment of the device according to the invention provided with reference to the accompanying figures, in which:

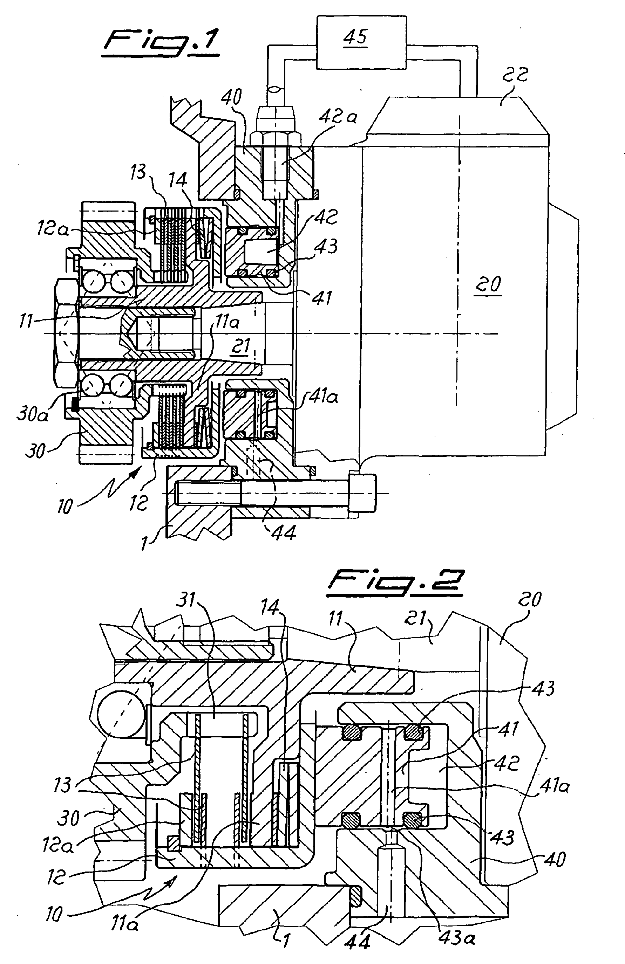

- Figure 1 shows a schematic cross-section along an axial plane of the device according to the present invention in the engaged condition; and
- Figure 2 shows a cross-section, similar to that of Figure 1, of a detail of the device in the disengaged condition.

As illustrated, the engaging/disengaging device 10 according to the invention is situated between the crankshaft 21 of the compressor, schematically indicated by 20, and the gear 30 for generating the motive power, in turn connected to the shaft (not shown) of the engine, a fixed part 1 of which is shown. In greater detail, the engaging/disengaging device 10 consists of a spring clutch which comprises a sleeve 11 coaxially mounted on the crankshaft 21 of the compressor and constrained thereto. The driving gear 30 is mounted on said sleeve with the arrangement of a bearing 30a in between.

Said sleeve 11 has a flange 11a, extending in a radial direction, the external circumference of which is integral with the bell 12 of the clutch; disks 13 are arranged inside the bell 12, being axially arranged between said flange 11a of the sleeve 11 and a bell closing plate 12a.

The disks 13 are alternately fixed to an axial extension 31 of the gear 30 or to the bell 12.

A set of Belleville springs 14 acting in the axial direction is arranged axially between the bell 12 and the radial flange 11a.

An annular piston 41 is axially arranged between the compressor 20 and the bell 12 of the clutch 10, said piston being inserted inside a chamber 42 formed in a ring 40 fixed to the mounting 1 of the engine and the compressor.

The chamber 42 is connected, by means of channels 42a, to a solenoid valve 45 able to cause alternately supplying/discharging of the chamber 42 by means of actuation of the piston 41.

Said piston 41 has in turn a radial duct 41a which connects the chamber 42 to a further duct 44 of the ring 40 in turn emerging externally.

Sealing of the piston is performed by means of toroidal rings 43 arranged - in the axial direction - on both sides of the said radial duct 41a and able to define an interspace 43a communicating with the corresponding outer and inner ends, respectively, of the radial duct 41a and the venting duct 44.

The operating principle of the device is as follows:
- during normal working conditions the chamber 42 is kept discharged, the springs 14 act against the bell 12 and the flange 11a, compressing the disks 13 which, actuated by the axial extension 31 of the driving gear 30, rotate so as to cause the rotation also of the sleeve 11 and therefore the crankshaft 21 of the compressor 20 which starts to compress air, supplying the reservoir 22;
- once the maximum operating pressure has been reached, a sensor detects said pressure and actuates the solenoid valve 45 which causes delivery inside the duct 42a supplying the chamber 42 which, being pressurised, axially pushes the piston 41 against the bell 12 which is pushed axially towards the driving gear 30 against the reaction of the spring 14; in this way slackening of the disks 13 occurs, said disks therefore no longer transmitting the motive power to the sleeve 11 which in turn assumes the idle condition, causing stoppage of the crankshaft 21.
- when the reservoir sensor detects a predefined minimum value of the operating pressure, it switches the solenoid valve 45 again so as to discharge the chamber 42 and cause renewed engagement of the clutch and therefore renewed actuation of the crankshaft 21 by means of the driving gear 30.

According to the invention, owing to the arrangement of the radial duct 41a of the piston 41 between the two sealing rings 43, it is possible to ensure always a venting action in the event of breakage or wear of the said rings; said venting is therefore useful in that it allows both the discharging, externally, of any pressurised air which might escape from the chamber 42, thereby preventing the accumulation thereof inside the engine compartment which would thus become pressurised, and the discharging of any oil from the engine compartment which attempts to enter into the chamber 42.

Said safety operation is essentially ensured by the fact that the interspace 43a situated between the two sealing rings 43 is subject to a negative pressure compared to both the air and the oil.

In addition, it is pointed out how, owing to the particular configuration of the device, it is possible to keep the said device extremely compact in the axial direction.

## Claims

1. Device for transmitting the motive power from a driving gear (30) to a rotating shaft (21), comprising a clutch (10) with disks (13) acting upon actuation of spring means (14) and an annular piston (41) for disengaging the said clutch, acting upon operation of associated means (45,42a) for controlling supplying/discharging of the chamber (42) of the piston (41), said piston (41) has a radial duct (41a) formed in an axial position situated between the sealing elements (43) of the said piston and able to connect the chamber (42) of the piston (41) to the interspace (43a) formed between the said piston and the said sealing elements (43), **characterized in that** it comprises at least one venting duct (44) for venting both air or oil which connects said interspace (43a) with the exterior.

2. Device according to Claim 1, **characterized in that** it comprises a sleeve (11) integral with the crankshaft (21) of a compressor (20) and supporting the driving gear (30).

3. Device according to Claim 2, **characterized in that** said clutch comprises a bell (12) constrained to a radial extension (11a) of said sleeve (11).

4. Device according to Claim 3, **characterized in that** the disks (13) of the clutch are alternately fixed to the bell (12) or to an axial extension (31) of the driving gear (30).

5. Device according to Claim 1, **characterized in that** said piston (41) is housed inside an associated containing chamber (42) formed in a fixed ring (40) axially arranged between a compressor (20) and the bell (12) of the clutch (10).

6. Device according to Claim 1, **characterized in that** said means for controlling supplying/discharging of the chamber (42) containing the piston (41) consist of a double-acting solenoid valve (45).

7. Device according to claim 1, **characterized in that** said piston sealing elements consist of toroidal seals (43) .

8. Device according to Claim 1, **characterized in that** said venting channel (44) is formed in the ring (40) supporting the piston (41).

9. Compressor assembly for braking systems of vehicles, comprising a compressor (20) and the device for transmitting the power of claim 1 with a rotating shaft (21) for actuating the said compressor, connected to a driving gear (30) by means of a clutch (10) with disks (13), acting upon engagement of spring means (14) and disengagement by an annular piston (41), acting upon operation of associated means (45,42a) for controlling supplying/discharging of the chamber (42) of the piston (41), said piston (41) has a radial duct (41a) formed in an axial position situated between the sealing elements (43) of the said piston and able to connect the chamber (42) of the piston (41) to the interspace (43a) formed between the said piston and said sealing element (43) it also comprises at least one venting channel (44) which connects said interspace (43a) with the exterior.

10. Compressor assembly according to Claim 9, **characterized in that** said transmission device comprises a sleeve (11) integral with the crankshaft (21) of the compressor (20) and supporting the driving gear (30).

## Patentansprüche

1. Vorrichtung zum Übertragen der Antriebskraft von einem Antriebszahnrad (30) zu einer Drehwelle (21), welche umfasst: eine Kupplung (10) mit Scheiben (13), die bei Betätigung von Federmitteln (14) arbeitet, und einen ringförmigen Kolben (41) zum Deaktivieren der Kupplung, der bei Betrieb von zugeordneten Mitteln (45, 42a) zum Steuern des Ladens/Entladens der Kammer (42) des Kolbens (41) arbeitet, wobei der Kolben (41) einen radialen Kanal (41 a) aufweist, der in einer zwischen den Dichtungselementen (43) des Kolbens befindlichen axialen Position ausgebildet ist und in der Lage ist, die Kammer (42) des Kolbens (41) mit dem zwischen dem Kolben und den Dichtungselementen (43) ausgebildeten Zwischenraum (43a) zu verbinden, **dadurch gekennzeichnet, dass** er mindestens einen Ablasskanal (44) zum Ablassen von Luft oder Öl umfasst, der den Zwischenraum (43a) mit dem Außenbereich verbindet.

2. Vorrichtung nach Anspruch 1, **dadurch gekennzeichnet, dass** sie einen mit der Kurbelwelle (21) eines Kompressors (20) integralen Mantel (11) umfasst, der das Antriebszahnrad (30) trägt.

3. Vorrichtung nach Anspruch 2, **dadurch gekennzeichnet, dass** die Kupplung eine Glocke (12) umfasst, die an einer radialen Verlängerung (11a) des Mantels (11) fest angebracht ist.

4. Vorrichtung nach Anspruch 3, **dadurch gekennzeichnet, dass** die Scheiben (13) der Kupplung im Wechsel an der Glocke (12) oder an einer axialen Verlängerung (31) des Antriebszahnrads (30) befestigt sind.

5. Vorrichtung nach Anspruch 1, **dadurch gekennzeichnet, dass** der Kolben (41) in einer zugeordneten, in einem festen Ring (40) ausgebildeten Aufnahmekammer (42), die axial zwischen einem Kompressor (20) und der Glocke (12) der Kupplung (10) angeordnet ist, untergebracht ist.

6. Vorrichtung nach Anspruch 1, **dadurch gekennzeichnet, dass** das Mittel zum Steuern des Ladens/Entladens der den Kolben (41) enthaltenden Kammer (42) aus einem doppelt wirkenden Magnetventil (45) besteht.

7. Vorrichtung nach Anspruch 1, **dadurch gekennzeichnet, dass** die Kolbendichtungselemente aus ringförmigen Dichtungen (43) bestehen.

8. Vorrichtung nach Anspruch 1, **dadurch gekennzeichnet, dass** der Ablasskanal (44) in dem den Kolben (41) stützenden Ring (40) ausgebildet ist.

9. Kompressoranordnung für Bremssysteme von Fahrzeugen, welche umfasst: einen Kompressor (20) und die Vorrichtung zum Übertragen der Kraft nach Anspruch 1, mit einer Drehwelle (21) zum Betätigen des Kompressors, welche mit einem Antriebszahnrad (30) mittels einer Kupplung (10) mit Scheiben (13) verbunden ist, die bei Betätigung von Federmitteln (14) arbeitet, und Deaktivierung durch einen ringförmigen Kolben (41), der bei Betrieb zugehöriger Mittel (45, 42a) zum Steuern des Ladens/Entladens der Kammer (42) des Kolbens (41) arbeitet, wobei der Kolben (41) einen radialen Kanal (41 a) aufweist, der in einer zwischen den Dichtungselementen (43) des Kolbens befindlichen axialen Position ausgebildet ist und in der Lage ist, die Kammer (42) des Kolbens (41) mit dem zwischen dem Kolben und dem Dichtungselement (43) ausgebildeten Zwischenraum (43a) zu verbinden, wobei er auch mindestens einen Ablasskanal (44) umfasst, der den Zwischenraum (43a) mit dem Außenbereich verbindet.

10. Kompressoranordnung nach Anspruch 9, **dadurch gekennzeichnet, dass** die Übertragungsvorrichtung einen mit der Kurbelwelle (21) des Kompressors (20) integralen Mantel (11) umfasst, der das Antriebszahnrad (30) stützt.

## Revendications

1. Dispositif de transmission de la force motrice d'un pignon d'entraînement (30) à un arbre rotatif (21), comprenant un embrayage (10) avec des disques (13) agissant sous l'actionnement de moyens de ressort (14), et un piston annulaire (41) pour débrayer ledit embrayage, agissant sous la mise en action de moyens associés (45, 42a) pour commander l'alimentation/l'évacuation de la chambre (42) du piston (41), ledit piston (41) présentant un conduit radial (41a) formé dans une position axiale située entre les éléments d'étanchéité (43) dudit piston et apte à relier la chambre (42) du piston (41) à l'espace (43a) formé entre ledit piston et lesdits éléments d'étanchéité (43), ***caractérisé en ce qu*'**il comprend au moins une canalisation de purge (44), destinée à la mise à l'air à la fois d'air ou d'huile, qui relie ledit espace (43a) avec l'extérieur.

2. Dispositif selon la revendication 1, ***caractérisé en ce qu*'**il comprend un manchon (11) solidaire du vilebrequin (21) d'un compresseur (20) et supportant le pignon d'entraînement (30).

3. Dispositif selon la revendication 2, ***caractérisé en ce que*** ledit embrayage comprend une cloche (12) restreinte par un prolongement radial (11a) dudit manchon (11).

4. Dispositif selon la revendication 3, ***caractérisé en ce que*** les disques (13) de l'embrayage sont fixés en alternance à la cloche (12) ou à un prolongement axial (31) du pignon d'entraînement (30).

5. Dispositif selon la revendication 1, ***caractérisé en ce que*** ledit piston (41) est logé à l'intérieur d'une chambre de logement associée (42) formée dans un anneau (segment) fixe (40) placé axialement entre un compresseur (20) et la cloche (12) de l'embrayage (10).

6. Dispositif selon la revendication 1, ***caractérisé en ce que*** lesdits moyens pour commander l'alimentation/l'évacuation de la chambre (42) contenant le piston (41) sont constitués par une électrovalve à double effet (45).

7. Dispositif selon la revendication 1, ***caractérisé en ce que*** lesdits éléments d'étanchéité du piston sont constitués par des joints toriques (43).

8. Dispositif selon la revendication 1, ***caractérisé en ce que*** ledit canal de purge (44) est formé dans l'anneau (segment) (40) supportant le piston (41).

9. Groupe compresseur pour des systèmes de freinage de véhicules, comprenant un compresseur (20) et le dispositif de transmission de force selon la revendication 1, avec un arbre rotatif (21) pour actionner ledit compresseur, relié à un pignon d'entraînement (30) au moyen d'un embrayage (10) avec des disques (13), agissant sous l'engagement de moyens de ressort (14) et débrayé par un piston annulaire (41), agissant sous la mise en action de moyens associés (45, 42a) pour commander l'alimentation/l'évacuation de la chambre (42) du piston (41), ledit piston (41) présentant un conduit radial (41a) formé dans une position axiale située entre les éléments d'étanchéité (43) dudit piston et apte à relier la chambre (42) du piston (41) à l'espace (43a) formé entre ledit piston et lesdits éléments d'étanchéité (43), et comprenant aussi au moins un canal de purge (44) qui relie ledit espace (43a) avec l'extérieur.

10. Groupe compresseur selon la revendication 9, ***caractérisé en ce que*** ledit dispositif de transmission comprend un manchon (11) solidaire du vilebrequin (21) du compresseur (20) et supportant le pignon d'entraînement (30).
